# EUROPEAN PATENT APPLICATION

(11) **EP 4 554 300 A1**
(43) Date of publication of application: **14.05.2025**
(21) Application number: 22949891.0
(22) Date of filing: 08.07.2022
(51) Int. Cl.: H04W 72/04

(54) **COMMUNICATION METHOD AND APPARATUS, DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/104653
(87) International publication number: WO 2024/007308

(57) **Abstract**

The embodiments of the present disclosure relate to the technical field of communications. Provided are a communication method and apparatus, a device, and a storage medium, which can be applied to a sensing by proxy (SBP) initiating device. The method comprises: determining an SBP request frame, wherein the SBP request frame is used for requesting the establishment of at least one SBP measurement, the SBP request frame comprises at least one piece of type identification information, and each piece of type identification information is used for indicating the measurement type of one SBP measurement; and sending the SBP request frame. The embodiments of the present disclosure can provide a method for establishing an SBP measurement.

## Description

### TECHNICAL FIELD

The embodiments of the present disclosure relate to the field of communication technology. Specifically, the embodiments of the present disclosure relate to a communication method, an apparatus, a device, and a storage medium.

### BACKGROUND

With the rapid development of mobile communication technology, wireless fidelity (Wi-Fi) technology has made great progress in transmission rate and throughput.

Among currently studied Wi-Fi technologies, wireless local area network (WLAN) sensing technology may be supported, for example, in application scenarios such as location discovery, proximity detection, and presence detection in dense environments (such as home environments and corporate environments). In the process of wireless local area network WLAN sensing measurement, sensing by proxy (SBP) measurement exists. The SBP measurement can be classified into a plurality of measurement types, such as trigger based (TB) measurement, null data packet announcement, trigger frame measurement, and responder to responder (R2R) measurement, or the like. The method of establishing the SBP measurement of each measurement type is still unknown.

### SUMMARY

The embodiment of the present disclosure provides a communication method, an apparatus, a device and a storage medium, which can provide a way to establish the SBP measurement.

In a first aspect, the embodiment of the present disclosure provides a communication method, which can be applied to a sensing by proxy (SBP) initiator, the method including:
determining an SBP request frame, wherein the SBP request frame is configured to request to establish at least one SBP measurement, the SBP request frame includes at least one piece of type identification information, each piece of the type identification information is configured to indicate a measurement type of an SBP measurement; and
sending the SBP request frame.

In the second aspect, the embodiment of the present disclosure provides a communication method, which can be applied to a sensing by proxy (SBP) responder, the method including:
receiving an SBP request frame, wherein the SBP request frame is configured to request to establish at least one SBP measurement, the SBP request frame includes at least one piece of type identification information, each piece of the type identification information is configured to indicate a measurement type of an SBP measurement.

In the third aspect, the embodiment of the present disclosure also provides a communication apparatus, including:
a determination unit, configured to determine an SBP request frame, wherein the SBP request frame is configured to request to establish at least one SBP measurement, the SBP request frame includes at least one piece of type identification information, each piece of the type identification information is configured to indicate a measurement type of an SBP measurement; and
a first transceiver unit, configured to send the SBP request frame.

In the fourth aspect, the embodiment of the present disclosure also provides a communication apparatus, including:
a second transceiver unit, configured to receive an SBP request frame, wherein the SBP request frame is configured to request to establish at least one SBP measurement, the SBP request frame includes at least one piece of type identification information, each piece of the type identification information is configured to indicate a measurement type of an SBP measurement.

In a fifth aspect, an embodiment of the present disclosure further provides an SBP responder, including a memory, a processor, and a computer program stored in the memory and executable on the processor, wherein the processor implements the communication method provided in the first aspect of the embodiment of the present disclosure when executing the program.

In a sixth aspect, an embodiment of the present disclosure further provides an SBP initiator, including a memory, a processor, and a computer program stored in the memory and executable on the processor, wherein the processor implements the communication method provided in the second aspect of the embodiment of the present disclosure when executing the program.

In a seventh aspect, an embodiment of the present disclosure further provides a computer-readable storage medium, wherein a computer program is stored on the computer-readable storage medium, and the computer program implements any of the communication methods provided in the embodiments of the present disclosure when executed by a processor.

In an embodiment of the present disclosure, a way to establish the SBP measurement can be provided, to establish SBP measurements of different measurement types.

Additional aspects and advantages of the embodiment of the present disclosure will be partially given in the following description, which will become apparent from the following description or be understood through the practice of the present disclosure.

### BRIEF DESCRIPTION OF THE DRAWINGS

In order to more clearly illustrate the technical solution of the embodiment of the present disclosure, the drawings required for use in the description of the embodiment of the present disclosure will be briefly introduced below. The drawings in the following description are only some embodiments of the present disclosure. For ordinary technicians in this field, other drawings can be obtained based on these drawings without creative labor.
FIG. 1 is a schematic diagram of an architecture of WLA perception measurement provided by an embodiment of the present disclosure;
FIG. 2 is a schematic diagram of communication connection provided by an embodiment of the present disclosure;
FIG. 3 is another schematic diagram of an architecture of WLA perception measurement provided by an embodiment of the present disclosure;
FIG. 4 is a flow diagram of a communication method provided by an embodiment of the present disclosure;
FIG. 5 is another flow diagram of a communication method provided by an embodiment of the present disclosure;
FIG. 6 is a structural diagram of a communication apparatus provided by an embodiment of the present disclosure;
FIG. 7 is another structural diagram of a communication apparatus provided by an embodiment of the present disclosure; and
FIG. 8 is a structural diagram of an electronic device provided by an embodiment of the present disclosure.

### DETAILED DESCRIPTION

In the embodiments of the present disclosure, the term "and/or" describes the association relationship of the associated objects, indicating that there may be three relationships. For example, A and/or B can represent: A exists alone, A and B exist at the same time, and B exists alone. The character "/" generally indicates that the associated objects before and after it are in an "or" relationship.

In the embodiments of the present disclosure, the term "a plurality of" refers to two or more, and other quantifiers are similar.

Here, the example embodiments will be described in detail, and examples thereof are shown in the accompanying drawings. When the following description refers to the drawings, unless otherwise indicated, the same numbers in different drawings represent the same or similar elements. The implementations described in the following example embodiments do not represent all implementations consistent with the present disclosure. Instead, they are merely examples of apparatuses and methods consistent with some aspects of the present disclosure, as detailed in the attached claims.

The terms used in the present disclosure are for the purpose of describing specific embodiments only and are not intended to limit the present disclosure. The singular forms "one", "said" and "the" used in the present disclosure and the attached claims are also intended to include the plural forms, unless the context clearly indicates other meanings. It should also be understood that the term "and/or" used herein refers to and includes any or all possible combinations of one or more associated listed items.

It should be understood that although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, for example, the word "if" used herein may be interpreted as "at..." or "when..." or "in response to determining that".

The technical solution in the embodiments of the present disclosure will be clearly and completely described below in conjunction with the drawings in the embodiments of the present disclosure. The described embodiments are only part of the embodiments of the present disclosure, not all of the embodiments. Based on the embodiments in the present disclosure, all other embodiments obtained by ordinary technicians in the field without creative work are within the scope of protection of the present disclosure.

The method and the apparatus are based on the same disclosed concept. Since the principles of solving the problem by the method and the apparatus are similar, the implementation of the apparatus and the method can refer to each other, and the repetition will not be repeated.

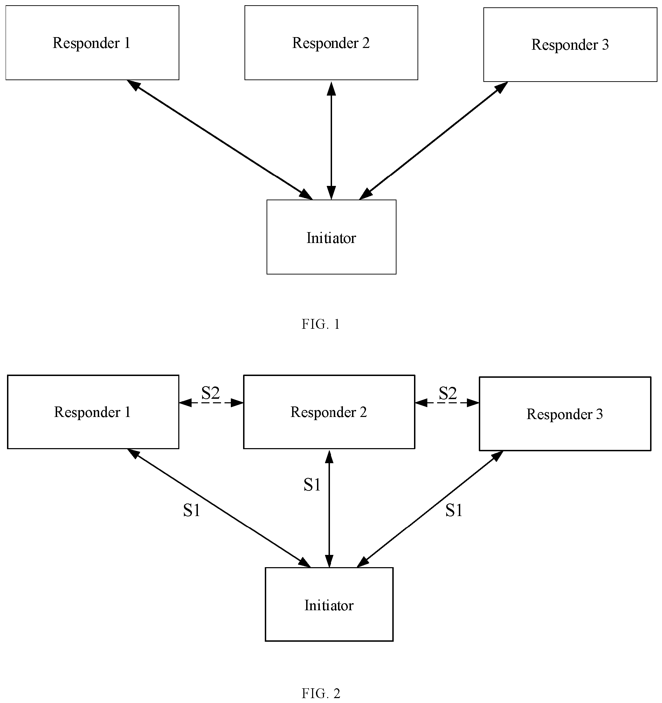

As a first example, referring to FIGS. 1 to 3, the architecture of the WLAN perception measurement applied by the communication method provided in the embodiments of the present disclosure and the WLAN perception measurement process are first introduced.

FIG. 1 shows a schematic diagram of the architecture of a WLA perception measurement. The perception initiator initiates the WLAN perception measurement, for example, initiates a WLAN perception measurement session, and there may be a plurality of perception responders responding to it, as shown in Responder 1, Responder 2, and Responder 3 in FIG. 2. When the perception initiator initiates the WLAN perception measurement, a plurality of associated or unassociated perception responders of the WLAN perception measurement may respond.

Here, "associated" may refer to the initial associated connection for communication is established between the perception initiator and the perception responder, and "unassociated" may refer to the initial associated connection for communication is not established between the perception initiator and the perception responder.

Referring to FIG. 2, the perception initiator and the perception responder communicate via a communication connection, shown as communication connection S1; the perception responders communicate via communication connection S2.

Each perception initiator may be a client; each perception responder (in this example, perception responder 1 to perception responder 3) may be a station device (Station, STA) or an access point device (Access Point, AP).

AP is a wireless switch for a wireless network and also an access device for a wireless network. The AP may include software applications and/or circuits, to enable other types of nodes in the wireless network to communicate with external and internal environments of the wireless network through the AP. As an example, the AP may be a terminal device or a network device equipped with a Wi-Fi chip.

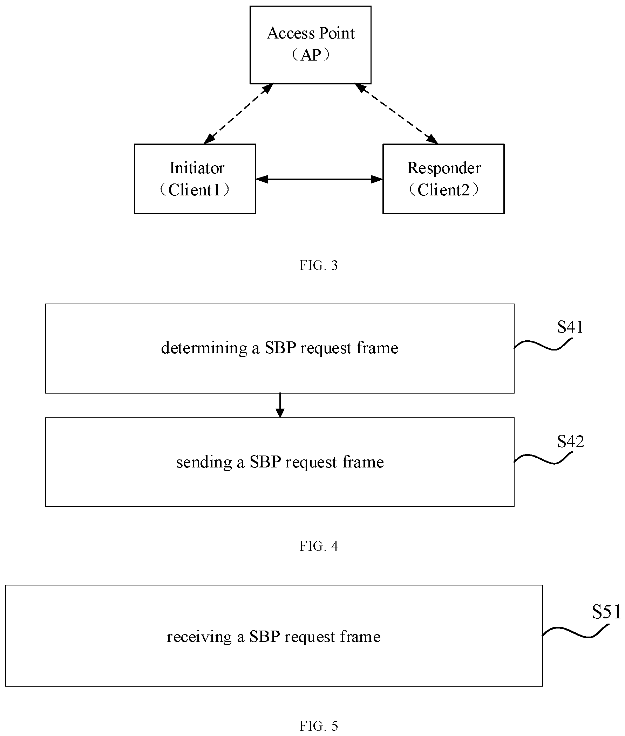

As another architecture, as shown in FIG. 3, the perception initiator and the perception responder may also be clients, and the two may communicate by connecting to the same access point device (AP); in FIG. 3, Client1 is the perception initiator, and Client2 is the perception responder.

In the WLAN sensing measurement process, in order to realize one-to-many communication between the STA as the perception initiator and the perception responder, the STA acts as a sensing by proxy (SBP) initiator (hereinafter, the SBP initiator is used as an example to explain), and initiates the SBP process, the AP acts as an SBP responder (hereinafter, the SBP responder is used as an example to explain) to proxy the STA to perform WLAN sensing measurement.

The SBP initiator and the SBP responder may include but are not limited to: cellular phones, smart phones, wearable devices, computers, personal digital assistants (PDAs), personal communication system (PCS) devices, personal information managers (PIMs), personal navigation devices (PNDs), global positioning systems, multimedia devices, Internet of Things (IoT) devices, etc.

A communication method provided by an embodiment of the present disclosure is specifically shown in FIG. 4, which is a flow chart of a communication method provided by an embodiment of the present disclosure. Optionally, the method can be applied to a perception proxy SBP responder, wherein the SBP initiator can be a STA. The method can include the following steps.

Step S41, an SBP request frame is determined.

The SBP request frame is used to request the establishment of at least one SBP measurement.

The SBP request frame includes at least one piece of type identification information, and each piece of type identification information is used to indicate the measurement type of an SBP measurement. That is, the SBP request frame indicates the measurement type of each SBP measurement requested to be established through at least one piece of type identification information.

Optionally, each piece of type identification information can be represented by an independent identification bit composed of at least one bit in the SBP request frame, or may also be represented by a measurement type information (Measurement type) field in the SBP request frame. Alternatively, the SBP request frame can include a sub-information element corresponding to each measurement type, and the sub-information element corresponding to each measurement type is used as the type identification information, which is not limited here.

As an example, an SBP request frame is used to request the establishment of an SBP measurement, and the SBP request frame includes a measurement type information field, and the measurement type information field is used to indicate the measurement type of the initiated SBP measurement.

As an example, an SBP request frame is used to request the establishment of a plurality of SBP measurements, and the SBP request frame includes a plurality of measurement type information fields, and the number of included measurement type information fields is the same as the number of SBP measurements requested to be established. Each measurement type information field is used to indicate the measurement type of an SBP measurement, and different measurement type information fields are used to indicate different measurement types of SBP measurements.

For example, in the case where the SBP request frame is used to request the establishment of two SBP measurements, the type identification information in the SBP request frame can be represented as:

| | |
|---|---|
| Measurement type | Measurement type |

Each type indication information is used to indicate the measurement type of an SBP measurement requested to be established.

Step S42, an SBP request frame is sent.

As an example, the SBP initiator sends an SBP request frame to the SBP responder, to request the establishment of at least one SBP measurement, and the measurement type of each SBP measurement is identified by the corresponding type identification information.

In the communication method applied to the SBP initiator provided in the present disclosure, the SBP measurement type includes at least one of the following:
R2R measurement,
NDPA measurement,
TF measurement,
DNPA measurement and TF measurement.

Among them, R2R measurement, NDPA measurement, and TF measurement all belong to TB measurement.

During the TF measurement process, the AP (SBP responder) sends a trigger frame to the STA participating in the WLAN perception measurement, and then the STA participating in the WLAN perception measurement can send a Null Data Packet (NDP) frame to the AP, so that the AP can use the NDP frame to perform the WLAN perception measurement.

TF measurement can also be called "TF sounding" or "TF detection".

In the NDPA measurement process, the AP sends an NDPA frame to the STA participating in the WLAN perception measurement, and sends a NDP frame to the STA participating in the WLAN perception measurement again. The STA participating in the WLAN perception measurement performs the WLAN perception measurement after receiving the NDPA frame and the NDP frame.

The NDPA measurement can also be called "NDPA sounding" or "NDPA detection".

In the R2R measurement process, the AP sends a trigger frame to the STAs participating in the WLAN perception measurement, and one of the STAs participating in the WLAN perception measurement sends a NDP frame to other STAs. The other STAs perform the WLAN perception measurement after receiving the NDP frame. At the same time, the AP can also receive the NDP frame and perform the WLAN perception measurement.

The measurement type of the DNPA measurement and the TF measurement indicates that the corresponding SBP measurement includes both NDPA measurement and TF measurement.

In the communication method applied to the SBP initiator provided in the present disclosure, each piece of type identification information in the SBP request frame indicates that the SBP measurement requested to be established is an R2R measurement through a first value, indicates that the SBP measurement requested to be established is a TB measurement through a second value, indicates that the SBP measurement requested to be established is an NDPA measurement through a third value, and indicates that the SBP measurement requested to be established is a TF measurement through a fourth value.

The first value, the second value, the third value, and the fourth value are different values, and the specific values can be determined based on the actual application scenario requirements, which is not be limited here.

As an example, each piece of type identification information in the SBP request indicates that the SBP measurement requested to be established is an R2R measurement through 00 (first value), indicates that the SBP measurement requested to be established is a TB measurement through 01 (second value), indicates that the SBP measurement requested to be established is an NDPA measurement through 10 (third value), and indicates that the SBP measurement requested to be established is a TF measurement through 11 (fourth value).

In the communication method applied to the SBP initiator provided by the present disclosure, when the SBP request frame is used to request the establishment of a plurality of SBP measurements, there may be SBP measurements of the same measurement type among the plurality of SBP measurements requested to be established, or the measurement types of the plurality of SBP measurements requested to be established are different from each other, which is not be limited here.

As an example, the SBP request frame is used to initiate the first SBP measurement, the second SBP measurement, and the third SBP measurement, and the measurement type of each SBP measurement is indicated by 3 different pieces of type identification information. At this time, there may be SBP measurements of the same measurement type among the first SBP measurement, the second SBP measurement, and the third SBP measurement, for example, the first SBP measurement and the second SBP measurement have the same measurement type, and the third SBP measurement has a measurement type different from the measurement type of the first SBP measurement and the second SBP measurement.

In the communication method applied to the SBP initiator provided by the present disclosure, when the SBP request frame is used to request the establishment of a plurality of SBP measurements and the measurement type of each SBP measurement is different, the type identification information used to indicate the measurement type of each SBP measurement can be arranged according to the preset order of the measurement type.

As an example, the SBP request frame is used to request the establishment of NDPA measurement and TF measurement, and the type identification information used to indicate the NDPA measurement and TF measurement can be represented based on the following manner:

| | |
|---|---|
| Measurement type 1 | Measurement type 2 |

Measurement type1 is used to indicate that the SBP request frame is used to request the establishment of NDPA measurement, and Measurement type2 is used to indicate that the SBP request frame is used to request the establishment of TF measurement.

In the communication method applied to the SBP initiator provided in the present disclosure, when the SBP initiator and the SBP responder support multi-connection communication, the SBP request frame also includes the link bitmap identification information corresponding to each SBP measurement, and each piece of link bitmap identification information is used to indicate the communication connection of the corresponding SBP measurement, that is, to indicate the establishment of the corresponding SBP measurement under the communication connection indicated by the link bitmap identification information.

As an example, when the SBP initiator and the SBP responder are devices supporting extremely high throughput (EHT), the SBP responder and the SBP initiator can support multiple communication connections, and the SBP request frame can include the link bitmap identification information corresponding to each SBP measurement.

The SBP request frame may include relevant indication information to indicate that the SBP initiator supports multi-connection communication, so that the SBP responder, which itself supports multi-connection communication, establishes SBP measurement under the corresponding communication connection for each SBP measurement.

Each piece of link bitmap identification information may indicate whether the corresponding communication connection is the communication connection corresponding to the corresponding SBP measurement through different values.

Each piece of link bitmap identification information may be represented by an independent identification bit in the SBP request frame, or by a related information field (such as a link bitmap information field) in the SBP request frame, which is not limited here.

As an example, each piece of link bitmap identification information occupies 2 bytes, and each bit corresponds to a communication connection. When the value of any bit is set to a preset value, it indicates that the corresponding communication connection is the communication connection corresponding to the corresponding SBP measurement, that is, the corresponding SBP measurement is established under the communication connection corresponding to the bit.

The above preset value can be 1, such as when one of the bits is set to 1, it is used to indicate that the corresponding SBP measurement is established under the communication connection corresponding to the bit.

In the case where the SBP request frame is used to request the establishment of a plurality of SBP measurements, the communication connections indicated by the link bitmap identification information corresponding to any two SBP measurements can be the same or different, which is not limited here.

As an example, in the case where the SBP request frame is used to request the establishment of a plurality of SBP measurements, the type identification information and the link bitmap identification information corresponding to any SBP measurement in the SBP request frame can be represented based on the following manner:

| | |
|---|---|
| Measurement type | Link bitmap |

The type identification information Measurement type is used to indicate the measurement type of the SBP measurement, and the link bitmap identification information Link bitmap is used to indicate the communication connection corresponding to the SBP measurement, and is also used to indicate the establishment of the SBP measurement under the corresponding communication connection.

In the communication method applied to the SBP initiator provided by the present disclosure, after sending the SBP request frame, the method further includes:
receiving an SBP response frame, wherein the SBP response frame includes a perception measurement establishment identifier corresponding to each of the SBP measurements.

As an example, the perception measurement establishment identifier can be used to indicate that the request to establish the perception measurement has been allowed or the perception measurement has been established.

In the communication method applied to the SBP initiator provided by the present disclosure, all SBP measurements requested to be established by the SBP request frame can correspond to the same perception measurement establishment identifier.

As an example, the SBP request frame requests to establish NDPA measurement and TF measurement, then the perception measurement establishment identifiers corresponding to the NDPA measurement and the TF measurement are the same.

Optionally, the SBP measurements of the same measurement type requested to be established by the SBP request frame correspond to the same perception measurement establishment identifier.

As an example, the SBP request frame requests to establish a first TF measurement, a second TF measurement, and an NDPA measurement, then the perception measurement establishment identifiers corresponding to the first TF measurement and the second TF measurement, and the perception measurement establishment identifier corresponding to the NDPA measurement is different from the perception measurement establishment identifiers corresponding to the first TF measurement and the second TF measurement.

Optionally, the SBP measurements requested to be established by the SBP request frame under the same communication connection correspond to the same perception measurement establishment identifier.

As an example, the SBP request frame requests to establish a first TF measurement and NDPA measurement under a first communication connection, and requests to establish a second TF measurement and R2R measurement under a second communication connection, then the first TF measurement and NDPA measurement correspond to the same perception measurement establishment identifier, and the second TF measurement and R2R measurement correspond to the same perception measurement establishment identifier.

An embodiment of the present disclosure provides a communication method, as shown in FIG. 5, the SBP responder may be an access point AP device. The method may include the following steps.

Step S51, an SBP request frame is received.

The SBP request frame is used to request to establish at least one SBP measurement.

The SBP request frame includes at least one piece of type identification information, and each piece of type identification information is used to indicate the measurement type of an SBP measurement. That is, the SBP request frame indicates the measurement type of each SBP measurement requested to be established through at least one piece of type identification information.

Optionally, each piece of type identification information may be represented by an independent identification bit composed of at least one bit in the SBP request frame, or may also be represented by a measurement type information (Measurement type) field in the SBP request frame, or the SBP request frame may include a sub-information element corresponding to each measurement type, and the sub-information element corresponding to each measurement type is used as the type identification information, which is not limited here.

As an example, the SBP request frame is used to request the establishment of an SBP measurement, and the SBP request frame includes a measurement type information field, and the measurement type information field is used to indicate the measurement type of the initiated SBP measurement.

As an example, an SBP request frame is used to request the establishment of a plurality of SBP measurements, and the SBP request frame includes a plurality of measurement type information fields, and the number of included measurement type information fields is the same as the number of SBP measurements requested to be established. Each measurement type information field is used to indicate the measurement type of an SBP measurement, and different measurement type information fields are used to indicate different measurement types of SBP measurements.

For example, in the case where the SBP request frame is used to request the establishment of two SBP measurements, the type identification information in the SBP request frame can be represented as:

| | |
|---|---|
| Measurement type | Measurement type |

Each type indication information is used to indicate the measurement type of an SBP measurement requested to be established.

As an example, the SBP responder receives an SBP request frame sent by the SBP initiator, the SBP request frame is used to request the establishment of at least one SBP measurement, and the measurement type of each SBP measurement is identified by the corresponding type identification information.

In the communication method applied to the SBP responder provided in the present disclosure, the SBP measurement type includes at least one of the following:
R2R measurement,
NDPA measurement,
TF measurement,
DNPA measurement and TF measurement.

Among them, R2R measurement, NDPA measurement, and TF measurement all belong to TB measurement.

During the TF measurement process, the AP (SBP responder) sends a trigger frame to the STA participating in the WLAN perception measurement, and then the STA participating in the WLAN perception measurement can send a Null Data Packet (NDP) frame to the AP, so that the AP can use the NDP frame to perform the WLAN perception measurement.

TF measurement can also be called "TF sounding" or "TF detection".

In the NDPA measurement process, the AP sends an NDPA frame to the STA participating in the WLAN perception measurement, and sends a NDP frame to the STA participating in the WLAN perception measurement again. The STA participating in the WLAN perception measurement performs the WLAN perception measurement after receiving the NDPA frame and the NDP frame.

The NDPA measurement can also be called "NDPA sounding" or "NDPA detection".

In the R2R measurement process, the AP sends a trigger frame to the STAs participating in the WLAN perception measurement, and one of the STAs participating in the WLAN perception measurement sends a NDP frame to other STAs. The other STAs perform the WLAN perception measurement after receiving the NDP frame. At the same time, the AP can also receive the NDP frame and perform the WLAN perception measurement.

The measurement type of the DNPA measurement and the TF measurement indicates that the corresponding SBP measurement includes both NDPA measurement and TF measurement.

In the communication method applied to the SBP responder provided in the present disclosure, each piece of type identification information in the SBP request frame indicates that the SBP measurement requested to be established is an R2R measurement through a first value, indicates that the SBP measurement requested to be established is a TB measurement through a second value, indicates that the SBP measurement requested to be established is an NDPA measurement through a third value, and indicates that the SBP measurement requested to be established is a TF measurement through a fourth value.

The first value, the second value, the third value, and the fourth value are different values, and the specific values can be determined based on the actual application scenario requirements, which is not be limited here.

As an example, each piece of type identification information in the SBP request indicates that the SBP measurement requested to be established is an R2R measurement through 00 (first value), indicates that the SBP measurement requested to be established is a TB measurement through 01 (second value), indicates that the SBP measurement requested to be established is an NDPA measurement through 10 (third value), and indicates that the SBP measurement requested to be established is a TF measurement through 11 (fourth value).

In the communication method applied to the SBP responder provided by the present disclosure, when the SBP request frame is used to request the establishment of a plurality of SBP measurements, there may be SBP measurements of the same measurement type among the plurality of SBP measurements requested to be established, or the measurement types of the plurality of SBP measurements requested to be established are different from each other, which is not be limited here.

As an example, the SBP request frame is used to initiate the first SBP measurement, the second SBP measurement, and the third SBP measurement, and the measurement type of each SBP measurement is indicated by 3 different pieces of type identification information. At this time, there may be SBP measurements of the same measurement type among the first SBP measurement, the second SBP measurement, and the third SBP measurement, for example, the first SBP measurement and the second SBP measurement have the same measurement type, and the third SBP measurement has a measurement type different from the measurement type of the first SBP measurement and the second SBP measurement.

In the communication method applied to the SBP responder provided by the present disclosure, when the SBP request frame is used to request the establishment of a plurality of SBP measurements and the measurement type of each SBP measurement is different, the type identification information used to indicate the measurement type of each SBP measurement can be arranged according to the preset order of the measurement type.

As an example, the SBP request frame is used to request the establishment of NDPA measurement and TF measurement, and the type identification information used to indicate the NDPA measurement and TF measurement can be represented based on the following manner:

| | |
|---|---|
| Measurement type 1 | Measurement type 2 |

Measurement type1 is used to indicate that the SBP request frame is used to request the establishment of NDPA measurement, and Measurement type2 is used to indicate that the SBP request frame is used to request the establishment of TF measurement.

In the communication method applied to the SBP responder provided in the present disclosure, when the SBP initiator and the SBP responder support multi-connection communication, the SBP request frame also includes the link bitmap identification information corresponding to each SBP measurement, and each piece of link bitmap identification information is used to indicate the communication connection of the corresponding SBP measurement, that is, to indicate the establishment of the corresponding SBP measurement under the communication connection indicated by the link bitmap identification information.

As an example, when the SBP initiator and the SBP responder are devices supporting extremely high throughput (EHT), the SBP responder and the SBP initiator can support multiple communication connections, and the SBP request frame can include the link bitmap identification information corresponding to each SBP measurement.

The SBP request frame may include relevant indication information to indicate that the SBP initiator supports multi-connection communication, so that the SBP responder, which itself supports multi-connection communication, establishes SBP measurement under the corresponding communication connection for each SBP measurement.

Each piece of link bitmap identification information may indicate whether the corresponding communication connection is the communication connection corresponding to the corresponding SBP measurement through different values.

Each piece of link bitmap identification information may be represented by an independent identification bit in the SBP request frame, or by a related information field (such as a link bitmap information field) in the SBP request frame, which is not limited here.

As an example, each piece of link bitmap identification information occupies 2 bytes, and each bit corresponds to a communication connection. When the value of any bit is set to a preset value, it indicates that the corresponding communication connection is the communication connection corresponding to the corresponding SBP measurement, that is, the corresponding SBP measurement is established under the communication connection corresponding to the bit.

The above preset value can be 1, such as when one of the bits is set to 1, it is used to indicate that the corresponding SBP measurement is established under the communication connection corresponding to the bit.

In the case where the SBP request frame is used to request the establishment of a plurality of SBP measurements, the communication connections indicated by the link bitmap identification information corresponding to any two SBP measurements can be the same or different, which is not limited here.

As an example, in the case where the SBP request frame is used to request the establishment of a plurality of SBP measurements, the type identification information and the link bitmap identification information corresponding to any SBP measurement in the SBP request frame can be represented based on the following manner:

| | |
|---|---|
| Measurement type | Link bitmap |

The type identification information Measurement type is used to indicate the measurement type of the SBP measurement, and the link bitmap identification information Link bitmap is used to indicate the communication connection corresponding to the SBP measurement, and is also used to indicate the establishment of the SBP measurement under the corresponding communication connection.

In the communication method applied to the SBP responder provided by the present disclosure, after receiving the SBP request frame, the method further includes:

sending an SBP response frame, wherein the SBP response frame includes a perception measurement establishment identifier corresponding to each of the SBP measurements.

In the communication method applied to the SBP responder provided by the present disclosure, all SBP measurements requested to be established by the SBP request frame can correspond to the same perception measurement establishment identifier.

As an example, the SBP request frame requests to establish NDPA measurement and TF measurement, then the perception measurement establishment identifiers corresponding to the NDPA measurement and the TF measurement are the same.

Optionally, the SBP measurements of the same measurement type requested to be established by the SBP request frame correspond to the same perception measurement establishment identifier.

As an example, the SBP request frame requests to establish a first TF measurement, a second TF measurement and an NDPA measurement, then the perception measurement establishment identifiers corresponding to the first TF measurement and the second TF measurement, and the perception measurement establishment identifier corresponding to the NDPA measurement is different from the perception measurement establishment identifiers corresponding to the first TF measurement and the second TF measurement.

Optionally, SBP measurements requested to be established by the SBP request frame under the same communication connection correspond to the same perception measurement establishment identifier.

As an example, the SBP request frame requests to establish a first TF measurement and NDPA measurement under a first communication connection, and requests to establish a second TF measurement and R2R measurement under a second communication connection, then the first TF measurement and NDPA measurement correspond to the same perception measurement establishment identifier, and the second TF measurement and R2R measurement correspond to the same perception measurement establishment identifier.

In the embodiment of the present disclosure, a manner for establishing SBP measurements of different measurement types is provided, and the measurement type of each SBP measurement requested to be established can be indicated by the type identification information in the SBP request frame, and the connection corresponding to each SBP measurement can be indicated by the link bitmap identification information corresponding to each SBP measurement, thereby completing the indication and establishment of SBP measurements of various measurement types.

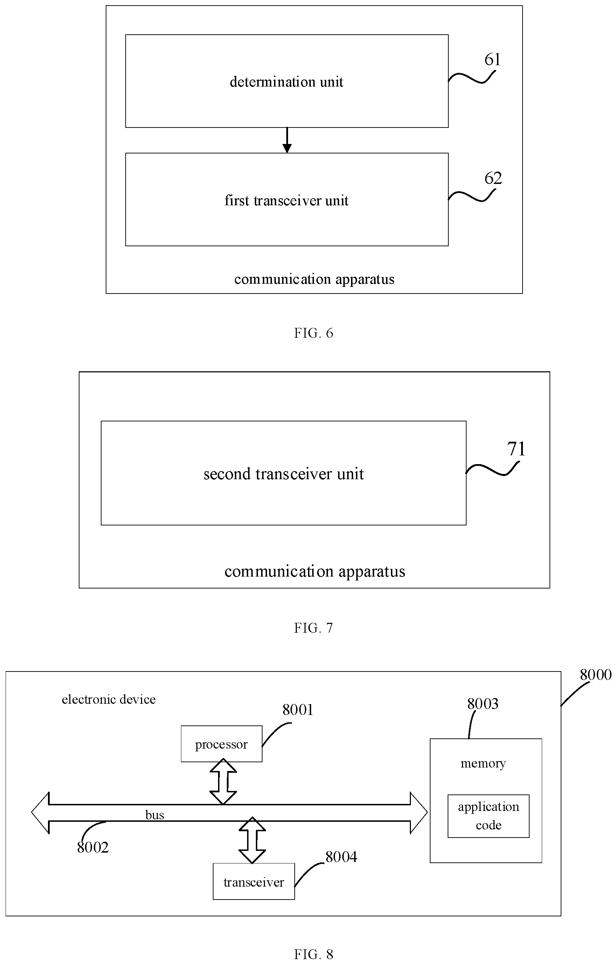

As shown in FIG. 6, the embodiment of the present disclosure provides a communication apparatus, including:
a determination unit 61, configured to determine an SBP request frame, wherein the SBP request frame is configured to request to establish at least one SBP measurement, the SBP request frame includes at least one piece of type identification information, each piece of the type identification information is configured to indicate a measurement type of an SBP measurement; and
a first transceiver unit 62, configured to send the SBP request frame.

Optionally, in the embodiment of the present disclosure, the measurement type includes at least one of the following:
the measurement type includes at least one of the following:
responder to responder (R2R) measurement;
null data packet announcement (NDPA) measurement;
trigger frame (TF) measurement;
NDPA measurement and TF measurement. Optionally, in the embodiment of the present disclosure, each piece of the type identification information indicates that the SBP measurement requested to be established is an R2R measurement through a first value, indicates that the SBP measurement requested to be established is a TB measurement through a second value, indicates that the SBP measurement requested to be established is an NDPA measurement through a third value, and indicates that the SBP measurement requested to be established is a TF measurement through a fourth value.

Optionally, in the embodiment of the present disclosure, the SBP request frame further includes link bitmap identification information corresponding to each of the SBP measurements, and each piece of the link bitmap identification information is configured to indicate a communication connection corresponding to the SBP measurement.

Optionally, in the embodiment of the present disclosure, the first transceiver unit 62 is also used to:
receive an SBP response frame, wherein the SBP response frame includes a perception measurement establishment identifier corresponding to each of the SBP measurements.

Optionally, in an embodiment of the present disclosure, all SBP measurements requested to be established by the SBP request frame correspond to an identical perception measurement establishment identifier;
or, SBP measurements of an identical measurement type requested to be established by the SBP request frame correspond to an identical perception measurement establishment identifier;
or, SBP measurements requested to be established by the SBP request frame under an identical communication connection correspond to an identical perception measurement establishment identifier.

As shown in FIG. 7, an embodiment of the present disclosure provides a communication apparatus, including:
a second transceiver unit 71, configured to receive an SBP request frame, wherein the SBP request frame is configured to request to establish at least one SBP measurement, the SBP request frame includes at least one piece of type identification information, each piece of the type identification information is configured to indicate a measurement type of an SBP measurement.

Optionally, in an embodiment of the present disclosure, the measurement type includes at least one of the following:
responder to responder (R2R) measurement;
null data packet announcement (NDPA) measurement;
trigger frame (TF) measurement;
NDPA measurement and TF measurement.

Optionally, in the embodiment of the present disclosure, each piece of the type identification information indicates that the SBP measurement requested to be established is an R2R measurement through a first value, indicates that the SBP measurement requested to be established is a TB measurement through a second value, indicates that the SBP measurement requested to be established is an NDPA measurement through a third value, and indicates that the SBP measurement requested to be established is a TF measurement through a fourth value.

Optionally, in the embodiment of the present disclosure, the SBP request frame further includes link bitmap identification information corresponding to each of the SBP measurements, and each piece of the link bitmap identification information is configured to indicate a communication connection corresponding to the SBP measurement.

Optionally, in the embodiment of the present disclosure, the second transceiver unit is also used to:
send an SBP response frame, wherein the SBP response frame includes a perception measurement establishment identifier corresponding to each of the SBP measurements.

Optionally, in the embodiment of the present disclosure, all SBP measurements requested to be established by the SBP request frame correspond to an identical perception measurement establishment identifier;
or, SBP measurements of an identical measurement type requested to be established by the SBP request frame correspond to an identical perception measurement establishment identifier;
or, SBP measurements requested to be established by the SBP request frame under an identical communication connection correspond to an identical perception measurement establishment identifier.

The embodiment of the present disclosure also provides an electronic device, as shown in FIG. 8, the electronic device 8000 shown in FIG. 8 includes: a processor 8001 and a memory 8003. The processor 8001 and the memory 8003 are connected, such as through a bus 8002. Optionally, the electronic device 8000 may also include a transceiver 8004. It should be noted that in actual applications, the transceiver 8004 is not limited to one, and the structure of the electronic device 8000 does not constitute a limitation on the embodiment of the present disclosure.

The memory 8003 is used to store the application code for executing the embodiment of the present disclosure, and the execution is controlled by the processor 8001. When the electronic device 8000 acts as an SBP responder, the processor 8001 is used to execute the application code stored in the memory 8003 to implement the communication method applicable to the SBP responder in this solution. When the electronic device 8000 acts as an SBP initiator, the processor 8001 is used to execute the application code stored in the memory 8003 to implement the communication method applicable to the SBP initiator in this solution.

The bus 8002 may include a path to transmit information between the above components. The bus 8002 may be a PCI (Peripheral Component Interconnect) bus or an EISA (Extended Industry Standard Architecture) bus, or the like. The bus 8002 may be classified into an address bus, a data bus, a control bus, etc. For ease of representation, only one thick line is used in FIG. 8, but it does not mean that there is only one bus or one type of bus.

The memory 8003 may be a read only memory (ROM) or other types of static storage devices that can store static information and instructions, a random access memory (RAM) or other types of dynamic storage devices that can store information and instructions, or an electrically erasable programmable read only memory (EEPROM), a compact disc read only memory (CD-ROM) or other optical disk storage, optical disc storage (including compressed optical disc, laser disc, optical disc, digital versatile disc, Blu-ray disc, etc.), a magnetic disk storage medium or other magnetic storage devices, or any other medium that can be used to carry or store the desired program code in the form of instructions or data structures and can be accessed by a computer, but is not limited thereto.

The embodiment of the present disclosure provides a computer-readable storage medium, on which a computer program is stored, and when the computer program is run on the computer, the computer can execute the corresponding content in the aforementioned method embodiment.

It should be understood that although the steps in the flowchart of the accompanying drawings are displayed in sequence as indicated by the arrows, these steps are not necessarily executed in sequence in the order indicated by the arrows. Unless otherwise specified herein, the execution of these steps is not strictly limited in order, and they can be executed in other orders. Moreover, at least part of the steps in the flowchart of the drawing may include a plurality of sub-steps or a plurality of stages, and these sub-steps or stages are not necessarily executed at the same time, but can be executed at different times, and their execution order is not necessarily sequential, but can be executed in turn or alternately with other steps or at least part of the sub-steps or stages of other steps.

It should be noted that the computer-readable storage medium disclosed above can be a computer-readable signal medium or a computer-readable storage medium or any combination of the above two. The computer-readable storage medium can be, for example, but not limited to, an electrical, magnetic, optical, electromagnetic, infrared, or semiconductor system, apparatus or device, or any combination of the above. More specific examples of computer-readable storage media can include, but are not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that can be used by or in combination with an instruction execution system, apparatus or device. In the present disclosure, a computer-readable signal medium may include a data signal propagated in a baseband or as part of a carrier wave, which carries a computer-readable program code. Such propagated data signals may take a variety of forms, including but not limited to electromagnetic signals, optical signals, or any suitable combination of the above. A computer-readable signal medium may also be any computer-readable storage medium other than a computer-readable storage medium, which may send, propagate, or transmit a program for use by or in combination with an instruction execution system, apparatus or device. The program code contained on the computer-readable storage medium may be transmitted using any appropriate medium, including but not limited to, wires, optical cables, RF (radio frequency), etc., or any suitable combination of the above.

The above-mentioned computer-readable storage medium may be contained in the above-mentioned wireless LAN initiator or responder, or it may exist alone without being assembled into the wireless LAN initiator or responder.

The computer-readable storage medium carries one or more programs. When the one or more programs are executed by the SBP initiator or the SBP responder, the SBP initiator or the SBP responder executes the corresponding communication method.

According to one aspect of the present disclosure, a computer program product or a computer program is provided, which includes computer instructions stored in a computer-readable storage medium. The processor of the computer device reads the computer instructions from the computer-readable storage medium, and the processor executes the computer instructions, so that the computer device executes the communication method provided in the above-mentioned various optional implementations.

The computer program code for performing the operation of the present disclosure can be written in one or more programming languages or a combination thereof, and the above programming languages include object-oriented programming languages, such as Java, Smalltalk, C++, and also include conventional procedural programming languages, such as "C" language or similar programming languages. The program code can be executed completely on the user's computer, partially on the user's computer, as an independent software package, partially on the user's computer and partially on a remote computer, or completely on a remote computer or server. In cases involving a remote computer, the remote computer may be connected to the user computer through any type of network, including a local area network (LAN) or a wide area network (WAN), or may be connected to an external computer, for example, by using an Internet service provider to establish a connection through the Internet.

The flowcharts and block diagrams in the accompanying drawings illustrate the possible architecture, functions, and operations of the systems, methods, and computer program products according to various embodiments of the present disclosure. In this regard, each box in the flowchart or block diagram may represent a module, a program segment, or a portion of a code, which contains one or more executable instructions for implementing the specified logical functions. It should also be noted that, in some alternative implementations, the functions marked in the box may also occur in an order different from that marked in the accompanying drawings. For example, two boxes represented in succession may actually be executed substantially in parallel, and they may sometimes be executed in the opposite order, depending on the functions involved. It should also be noted that, each box in the block diagram and/or flowchart, and the combination of boxes in the block diagram and/or flowchart, can be implemented by a dedicated hardware-based system that performs the specified function or operation, or can be implemented by a combination of dedicated hardware and computer instructions.

The modules involved in the embodiments described in the present disclosure can be implemented by software or by hardware. The name of the module does not constitute a limitation on the module itself in some cases. For example, module A can also be described as "module A for performing operation B".

The above description is only a preferred embodiment of the present disclosure and an explanation of the technical principles used. Those skilled in the art should understand that the scope of disclosure involved in the present disclosure is not limited to the technical solutions formed by a specific combination of the above technical features, but also should cover other technical solutions formed by any combination of the above technical features or their equivalent features without departing from the above disclosed concept, for example, technical solutions formed by replacing the above features with the technical features with similar functions disclosed in the present disclosure (but not limited to).

## Claims

1. A communication method, applied to a sensing by proxy, SBP, initiator, the method comprising:
determining an SBP request frame, wherein the SBP request frame is configured to request to establish at least one SBP measurement, the SBP request frame comprises at least one type identification information, each type identification information is configured to indicate a measurement type of an SBP measurement; and
sending the SBP request frame.

2. The method according to claim 1, wherein the measurement type comprises at least one of the following:
responder to responder, R2R, measurement;
null data packet announcement, NDPA, measurement;
trigger frame, TF, measurement;
NDPA measurement and TF measurement.

3. The method according to claim 1, wherein each type identification information indicates that the SBP measurement requested to be established is an R2R measurement through a first value, indicates that the SBP measurement requested to be established is a TB measurement through a second value, indicates that the SBP measurement requested to be established is an NDPA measurement through a third value, and indicates that the SBP measurement requested to be established is a TF measurement through a fourth value.

4. The method according to claim 1, wherein the SBP request frame further comprises link bitmap identification information corresponding to each of the SBP measurements, and each link bitmap identification information is configured to indicate a communication connection corresponding to the SBP measurement.

5. The method according to claim 1, further comprising:
receiving an SBP response frame, wherein the SBP response frame comprises a perception measurement establishment identifier corresponding to each of the SBP measurements.

6. The method according to claim 5, wherein all SBP measurements requested to be established by the SBP request frame correspond to an identical perception measurement establishment identifier;
or, SBP measurements of an identical measurement type requested to be established by the SBP request frame correspond to an identical perception measurement establishment identifier;
or, SBP measurements requested to be established by the SBP request frame under an identical communication connection correspond to an identical perception measurement establishment identifier.

7. A communication method, applied to a sensing by proxy, SBP, responder, the method comprising:
receiving an SBP request frame, wherein the SBP request frame is configured to request to establish at least one SBP measurement, the SBP request frame comprises at least one type identification information, each type identification information is configured to indicate a measurement type of an SBP measurement.

8. The method according to claim 7, wherein the measurement type comprises at least one of the following:
responder to responder, R2R, measurement;
null data packet announcement, NDPA, measurement;
trigger frame, TF, measurement;
NDPA measurement and TF measurement.

9. The method according to claim 7, wherein each type identification information indicates that the SBP measurement requested to be established is an R2R measurement through a first value, indicates that the SBP measurement requested to be established is a TB measurement through a second value, indicates that the SBP measurement requested to be established is an NDPA measurement through a third value, and indicates that the SBP measurement requested to be established is a TF measurement through a fourth value.

10. The method according to claim 7, wherein the SBP request frame further comprises link bitmap identification information corresponding to each of the SBP measurements, and each link bitmap identification information is configured to indicate a communication connection corresponding to the SBP measurement.

11. The method according to claim 7, further comprising:
sending an SBP response frame, wherein the SBP response frame comprises a perception measurement establishment identifier corresponding to each of the SBP measurements.

12. The method according to claim 11, wherein all SBP measurements requested to be established by the SBP request frame correspond to an identical perception measurement establishment identifier;
or, SBP measurements of an identical measurement type requested to be established by the SBP request frame correspond to an identical perception measurement establishment identifier;
or, SBP measurements requested to be established by the SBP request frame under an identical communication connection correspond to an identical perception measurement establishment identifier.

13. A communication apparatus, comprising:
a determination unit, configured to determine an SBP request frame, wherein the SBP request frame is configured to request to establish at least one SBP measurement, the SBP request frame comprises at least one type identification information, each type identification information is configured to indicate a measurement type of an SBP measurement; and
a first transceiver unit, configured to send the SBP request frame.

14. A communication apparatus, comprising:
a second transceiver unit, configured to receive an SBP request frame, wherein the SBP request frame is configured to request to establish at least one SBP measurement, the SBP request frame comprises at least one type identification information, each type identification information is configured to indicate a measurement type of an SBP measurement.

15. An SBP initiator, wherein the SBP responder comprises a memory, a processor, and a computer program stored in the memory and executable on the processor, and the processor implements the method according to any one of claims 1 to 6 when executing the program.

16. An SBP responder, wherein the SBP initiator comprises a memory, a processor, and a computer program stored in the memory and executable on the processor, and the processor implements the method according to any one of claims 7 to 12 when executing the program.

17. A computer-readable storage medium, wherein a computer program is stored on the computer-readable storage medium, and the computer program implements the method according to any one of claims 1 to 12 when executed by a processor.
